# EUROPEAN PATENT SPECIFICATION

(11) **EP 2 837 819 B1**
(45) Date of publication and mention of the grant of the patent: **23.03.2016**
(21) Application number: 13180367.8
(22) Date of filing: 14.08.2013
(51) Int. Cl.: F03D 1/06

(54) **Method of installing a rotor blade**
Verfahren zum Einbauen eines Rotorblatts
Procédé pour installer une pale de rotor

(43) Date of publication of application: 18.02.2015
(73) Proprietor: Siemens Aktiengesellschaft, 80333 München (DE)
(72) Inventor: Ebbesen, Henning, 6900 Skjern (DK)

(56) References cited:
- EP-A1- 2 574 773
- WO-A1-2009/068038
- WO-A2-2011/076795
- DE-A1-102011 013 547
- US-A1- 2011 142 658

## Description

The invention relates to a method to install a rotor blade at a wind turbine.

A wind turbine comprises a nacelle that is arranged on top of a tower. A rotor is attached to the nacelle that comprises a rotor hub and a plurality of rotor blades.

During the installation of the wind turbine the nacelle is arranged on top of the tower. Then the rotor hub and the rotor blades need to be attached to the nacelle.

Often the rotor blades are connected to the hub at ground level and are then hoisted up to the nacelle and connected to the nacelle as one piece. Thus a crane needs one turn to lift up the rotor of the wind turbine.

US 2011/0142658 A1 describes a modular rotor blade hub for a wind turbine that includes a plurality of segments, wherein at least one segment includes at least one face abutting against at least one face of at least one adjacent segment, and wherein at least one of said faces extends from an outer periphery of the hub to a central region of the hub. Further, methods for mounting a wind turbine including a modular hub are provided.

As the wind turbines get more powerful, the rotor blades are constructed longer and heavier.

Therefore it is known to mount the hub to the nacelle and thereafter lift the rotor blades up to the hub, one after the other. The connection between the rotor blades and the hub is then established in the working height of the hub.

For this mounting method a crane needs four turns to lift up the pieces to form the rotor hub. In addition time is needed to establish the connection between the rotor blades and the hub. Thus the installation takes longer.

It is therefore the aim of the invention to provide an improved method to install the rotor of a wind turbine.

The object of the invention is achieved by the independent claim 1. Further features of the invention are disclosed in the dependant claims.

A method to install a rotor of a wind turbine at a nacelle of a wind turbine comprises the step of connecting at least a first rotor blade to a first segment of a hub for transportation and/or installation purposes.

During the installation of the wind turbine a rotor is connected to the nacelle of the wind turbine. The rotor of the wind turbine comprises a rotor hub and rotor blades. The rotor blades are connected to the rotor hub and the rotor hub is connected rotatable to the nacelle of the wind turbine.

The hub of the rotor is segmented and each segment of the hub comprises a connection area to connect a rotor blade to the segment of the hub.

A first rotor blade is connected to a first segment of the hub.

A rotor blade is connected to a hub in a way that a pitch angle of the rotor blade in respect to the hub can be regulated and controlled. Thus the connection between the rotor blade and the hub comprises a mechanical connection using a bearing.

An electric or hydraulic component is needed to adjust and control the pitch angle of the rotor blade. Each segment of the hub comprises its electric or hydraulic component to regulate the pitch angle. In addition, the segment of the hub comprises the bearing that allows the pitch movement of the rotor blade during the operation of the wind turbine.

The rotor blade is connected to the segment of the hub before the hub is connected to the nacelle of the wind turbine. Thus the connection between the rotor blade and the segment of the hub can be performed at ground level at the installation site of the wind turbine.

The connection between the rotor blade and the segment of the hub can also be performed at a remote location, for example at the production site of the wind turbine blade. The installation can be performed for example within a building, where a rotor blade and a hub segment are protected from environmental and meteorological influences. Thus wind, rain and cold temperatures do not influence the establishment of the connection between the rotor blade and the hub segment.

Thus the connection between the rotor blade and the hub segment can be established on ground level and the installation personnel performing the connection do not have to work at hub height of the wind turbine. Thus the connection can be established more easily and safer.

In addition the connection and the function of the pitch system of the rotor blade can be tested at ground level.

The connection can be established at the production site where all tools and test systems necessary are available.

The rotor blade and the hub segment that are connected together can then be transported to the installation site of the wind turbine.

The method comprises the steps of hoisting at least a first segment of the hub together with the first rotor blade up to a nacelle of a wind turbine and connecting at least the first segment of the hub to the nacelle of the wind turbine.

A segment of a hub is connected to a rotor blade. The rotor blade together with the segment of the hub is hoisted up towards the nacelle of the wind turbine.

The nacelle of the wind turbine is installed on top of the tower. The segment of the hub is then connected to the nacelle of the wind turbine.

Thus the rotor blade connected to the segment of the hub is then installed at the wind turbine.

A single rotor blade connected to the segment of the hub is more light weight then a complete rotor of a wind turbine including the hub and all rotor blades.

Thus less weight has to be lifted up to the nacelle of the wind turbine. Thus a smaller crane can be used to lift up the rotor blade and the segment of the hub.

In additional a single rotor blade with a segment of a hub comprises less area that can interact with the wind at the installation site of the wind turbine.

Thus the single rotor blade with a segment of the hub is easier to install at the nacelle of the wind turbine.

The method comprises the steps of connecting a second rotor blade to a second segment of the hub. The second rotor blade and the second segment of the hub are hoisted up to nacelle of the wind turbine. The second segment of the hub is connected to the nacelle of the wind turbine and to the first segment of the hub.

Thus the other rotor blades necessary to establish the rotor of a wind turbine can be connected to one of the respective segments of the hub.

This connection can also be performed at a production site or on ground level at the installation site of the wind turbine.

When the connection is established at a production site the rotor blades and the segments of the hub that are connected together are transported to the installation site of the wind turbine.

A second rotor blade that is connected to a second segment of the hub is hoisted up to the nacelle of the wind turbine.

There the second segment of the hub is connected to the nacelle of the wind turbine. In addition the connection to the first segment of the hub is established.

Nowadays, wind turbines comprise three rotor blades. Thus three single rotor blades connected to a segment of a hub each are lifted up towards the nacelle of the wind turbine and are connected to the nacelle and to each other.

Thus the rotor of the wind turbine is established at their installation site up at a nacelle at a wind turbine.

Thus the single rotor blades and the segments of the hub are more light weight then the complete rotor of the wind turbine. Thus a smaller crane is needed.

In addition, the rotor blade and the segment of the hub show a smaller area to interact with the wind during the installation at the wind turbine. Thus the installation of the segment of the hub together with the rotor blade is easier to perform than the installation of a complete rotor of the wind turbine.

The method comprises the step of establishing an electric and/or a hydraulic connection between the first segment of the hub and the second segment of the hub to connect an electric or a hydraulic system within the hub.

An electric and/or a hydraulic system are present in the hub of the wind turbine. This system can for example be a pitch system to change and control the pitch angle of the rotor blade in respect to the hub of the wind turbine.

A segment of a hub is connected to a rotor blade. A pitch system is installed in a segment of a hub.

At least two segments of a hub form a hub of the wind turbine.

The segments of the hub together with the rotor blades attached to the segment of the hub are hoisted up towards the nacelle of the wind turbine and are connected to the nacelle of the wind turbine.

After the segments of the hub are connected to the nacelle of the wind turbine and are connected together, a connection of the electric and/or the hydraulic components in the segments of the hub is established. Thus the electric and/or hydraulic systems in the hub of the wind turbine are connected and can be controlled together.

The method comprises the step of establishing an electric and/or a hydraulic connection between at least one segment of the hub and the nacelle of the wind turbine.

An electric and/or a hydraulic system within the hub of the wind turbine can for example be a pitch system, to vary the angle of the rotor blades in respect to the hub of the wind turbine.

The segments of the hub are connected to the nacelle to form a hub of the wind turbine. The hub of the wind turbine is connected rotatable in respect to the nacelle of the wind turbine.

A connection between the electric and/or hydraulic system within the nacelle of the wind turbine into the hub of the wind turbine is established.

Thus electrical and/or hydraulically systems or components within the hub of the wind turbine can be controlled and operated from the nacelle of the wind turbine.

The connection is established as a kind of a rotatable connection by using a rotary unit for example.

The method comprises the steps of connecting a first rotor blade to a first segment of a hub and connecting a second rotor blade to a segment second of the hub. At least the first segment of the hub and the second segment of the hub are connected.

The method comprises the further steps of hoisting at least two segments up to the nacelle of the wind turbine and connecting the segments to the nacelle of the wind turbine.

A rotor of a wind turbine comprises rotor blades and a hub. A rotor blade is connected to a segment of a hub to form a segment of a rotor of the wind turbine.

The connection between the rotor blade and the segment of the hub can be performed on ground level at the installation site of the wind turbine. The connection can also be established at a production site, for example the production site of the rotor blade. There the installation can be performed within a building independently from environmental or weather conditions.

The rotor blade together with the segment of the hub can then be transported to the installation site of the wind turbine.

The at least two segments of the hub are connected on ground level at the installation site of the wind turbine. Thus the segments of the hub together with the rotor blades are connected together to form at least a part of the rotor of the wind turbine.

The at least two segments of the hub that are connected together are hoisted up towards the nacelle of the wind turbine and are connected to the nacelle.

Thus at least a part of the rotor of the wind turbine comprising at least two segments of the hub is installed at the nacelle of the wind turbine.

Thus the connection between the segment of the hub and the rotor blade can be performed at a location that is independent from the installation site of the wind turbine.

The segments of the rotor can be tested for example at the production site of the rotor blade of the wind turbine. The segments of the hub together with the rotor blades can then be transported to the installation site of the wind turbine and can there be connected to each other.

Thus any electric or hydraulic connection between the segments of the hub can establish on ground level at the installation site of the wind turbine.

Thus the personnel establishing the connection can work on ground level. Thus the safety for the installation personnel is increased.

The at least two segments of the hub that are connected together, or the complete rotor of the wind turbine, is hoisted up towards the nacelle of the wind turbine. There the connection to the nacelle of the wind turbine is established.

Thus the crane to lift up the rotor towards the nacelle of the wind turbine is only needed for one lifting operation.

Thus the crane time for the crane capable of lifting up the rotor to the nacelle of the wind turbine is minimized. Thus the installation costs of the rotor of the wind turbine are reduced.

The invention is shown in more detail by the help of figures. The figures show a preferred configuration and do not limit the scope of the invention.
- FIG 1: shows a wind turbine during the installation of a rotor blade,
- FIG 2: shows the installation of a second rotor blade at a wind turbine,
- FIG 3: shows a transportation of a rotor blade,
- FIG 4: shows the installation of a rotor at a wind turbine.

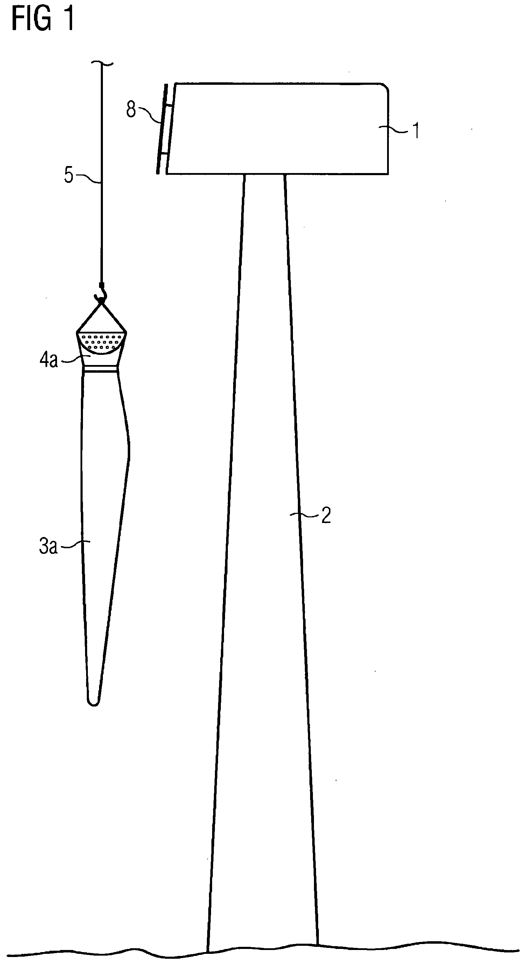

FIG 1 shows a wind turbine during the installation of a rotor blade. The wind turbine comprises a nacelle 1 and a tower 2. The nacelle 1 comprises an area 8 to connect the hub of the wind turbine to the nacelle 1. A first rotor blade 3a is connected to a first segment of the hub 4a. The first rotor blade 3a together with the first segment of the hub 4a is hoisted up towards the nacelle 1 by a crane 5. After the first rotor blade 3a together with the first segment hub 4a is hoisted up towards the nacelle 1. The first segment of the hub 4a is connected to the connection area 8.

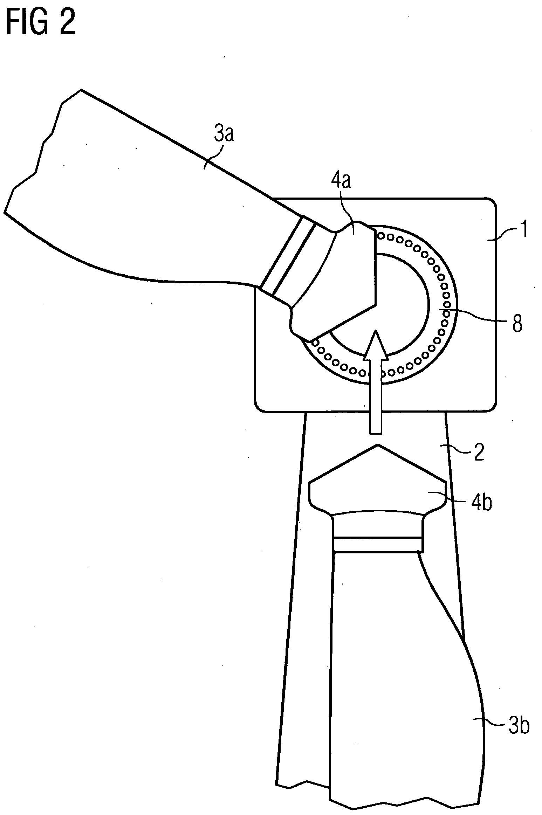

FIG 2 shows the installation of a second rotor blade at a wind turbine. The wind turbine comprises a nacelle 1 that is arranged in the top of the tower 2. The nacelle 1 comprises an area 8 to connect the hub of the wind turbine to the nacelle 1.

A first rotor blade 3a together with a first segment of the hub 4a is connected to the connection area 8. A second rotor blade 3b is connected to a second segment of the hub 4b. A second rotor blade 3b together with the second segment of the hub 4b is hoisted up towards the nacelle 1 to be connected at a connection area 8. The second segment of the hub 4b is than connected to the connection area 8 and to the first segment of the hub 4a.

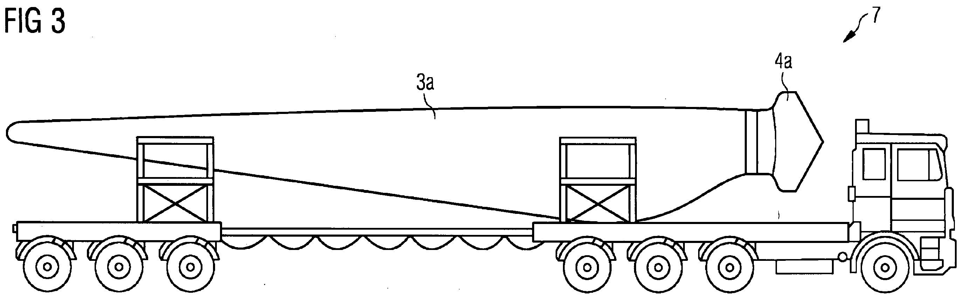

FIG 3 shows the transportation of a first rotor blade 3a together with the first segment of the hub 4a. The first segment of the hub 4a is connected to the first rotor blade 3a.

The first rotor blade 3a together with the first segment of the hub 4a is arranged on the transportation vehicle 7. A rotor blade together with the segment of the hub are transported is a pre-mounted unit to the erection side of the wind turbine.

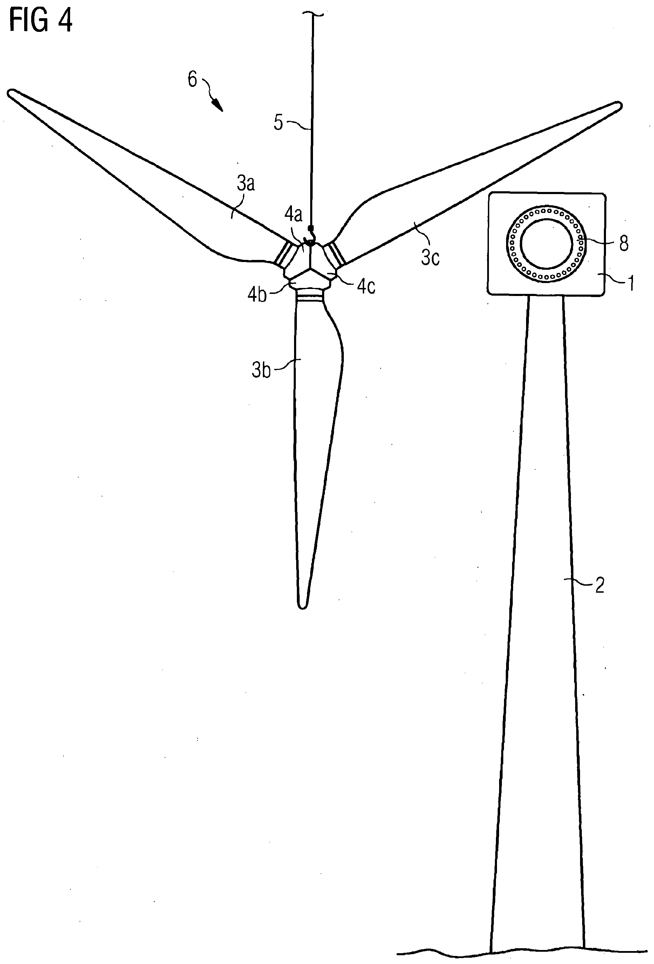

FIG 4 shows the installation of a rotor at a wind turbine. The rotor of the wind turbine comprises a hub 6 and rotor blades 3. The hub 6 is build of three segments of a hub 4a, 4b and 4c. The three rotor blades 3a, 3b, 3c are connected to one segment of the hub each. The wind turbine comprises a nacelle 1 that is arranged on top of the tower 2. The nacelle 1 comprises an area 8 to connect the rotor to the nacelle 1.

The first rotor blade 3a is connected to a first segment of the hub 4a. A second rotor blade 3b is connected to a second segment of the hub 4b and a third rotor blade 3c is connected to a third segment of the hub 4c.

The three segments 4a, 4b, 4c of the hub 6 are connected together to form the hub 6 at a ground level. Thus the rotor of the wind turbine comprising the three rotor blades 3a, 3b, 3c and the hub 6 with the segments 4a, 4b, 4c is pre-mounted on the ground before it is hoisted up to the nacelle 1 of the wind turbine.

A crane 5 is connected to the hub 6 to lift-up the rotor of the wind turbine towards the connection area 8 of the nacelle 1.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application do not exclude a plurality, and "comprising" does not exclude other steps or elements. Also elements described in association with different embodiments may be combined. It should also be noted that reference signs in the claims should not be construed as limiting the scope of the claims.

## Claims

1. Method to install a rotor of a wind turbine at a nacelle (1) of a wind turbine, comprising the step of
- connecting at least a first rotor blade (3a) to a first segment (4a) of a hub for transportation and/or installation purposes,
- hoisting at least the first segment (4a) of the hub together with the first rotor blade (3a) up to a nacelle (1) of a wind turbine,
- connecting at least the first segment (4a) of the hub to the nacelle (1) of the wind turbine,
- connecting a second rotor blade (3b) to a second segment (4b) of the hub,
- hoisting up the second rotor blade (3b) and the second segment (4b) of the hub to the nacelle (1) of the wind turbine,
- connecting the second segment (4b) of the hub to the nacelle (1) of the wind turbine and to the first segment (4a) of the hub.

2. Method according to claim 1, comprising the step of
- establishing an electric and/or a hydraulic connection between the first segment (4a) of the hub and the second segment (4b) of the hub, to connect an electric or a hydraulic system within the hub (6).

3. Method according one of the claims 1 or 2, comprising the step of
- establishing an electric and/or a hydraulic connection between at least one segment (4a, 4b, 4c) of the hub and the nacelle (1) of the wind turbine.

4. Method according to claims 1, comprising the steps of
- connecting a first rotor blade (3a) to a first segment (4a) of a hub,
- connecting a second rotor blade (3b) to a second segment (4b) of the hub,
- connecting at least the first segment (4a) of the hub and the second segment (4b) of the hub,
- hoisting the at least two segments (4a, 4b) up to the nacelle (1) of the wind turbine, and
- connecting the segments (4a, 4b) to the nacelle (1) of the wind turbine.

## Patentansprüche

1. Verfahren zum Installieren eines Rotors einer Windenergieanlage an einer Gondel (1) einer Windenergieanlage, das folgende Schritte umfasst:
- Verbinden zumindest eines ersten Rotorblatts (3a) mit einem ersten Segment (4a) einer Nabe zu Transport- und/ oder Installationszwecken,
- Hochziehen zumindest des ersten Segments (4a) der Nabe zusammen mit dem ersten Rotorblatt (3a) zu einer Gondel (1) einer Windenergieanlage,
- Verbinden zumindest des ersten Segments (4a) der Nabe mit der Gondel (1) der Windenergieanlage,
- Verbinden eines zweiten Rotorblatts (3b) mit einem zweiten Segment (4b) der Nabe,
- Hochziehen des zweiten Rotorblatts (3b) und des zweiten Segments (4b) der Nabe zur Gondel (1) der Windenergieanlage,
- Verbinden des zweiten Segments (4b) der Nabe mit der Gondel (1) der Windenergieanlage und mit dem ersten Segment (4a) der Nabe.

2. Verfahren nach Anspruch 1, das folgenden Schritt umfasst:
- Herstellen einer elektrischen und/ oder hydraulischen Verbindung zwischen dem ersten Segment (4a) der Nabe und dem zweiten Segment (4b) der Nabe zum Verbinden eines elektrischen oder hydraulischen Systems innerhalb der Nabe (6).

3. Verfahren nach Anspruch 1 oder 2, das folgenden Schritt umfasst:
- Herstellen einer elektrischen und/ oder hydraulischen Verbindung zwischen mindestens einem Segment (4a, 4b, 4c) der Nabe und der Gondel (1) der Windenergieanlage.

4. Verfahren nach Anspruch 1, das folgende Schritte umfasst:
- Verbinden eines ersten Rotorblatts (3a) mit einem ersten Segment (4a) einer Nabe,
- Verbinden eines zweiten Rotorblatts (3b) mit einem zweiten Segment (4b) der Nabe,
- Verbinden zumindest des ersten Segments (4a) der Nabe und des zweiten Segments (4b) der Nabe,
- Hochziehen der mindestens zwei Segmente (4a, 4b) zur Gondel (1) der Windenergieanlage und
- Verbinden der Segmente (4a, 4b) mit der Gondel (1) der Windenergieanlage.

## Revendications

1. Procédé d'installation d'un rotor d'une éolienne au niveau d'une nacelle (1) d'une éolienne, comprenant l'étape de
- connexion d'au moins une première pale (3a) de rotor à un premier segment (4a) d'un moyeu à des fins de transport et/ou d'installation,
- levage d'au moins le premier segment (4a) du moyeu ensemble avec la première pale (3a) de rotor jusqu'à une nacelle (1) d'une éolienne,
- connexion d'au moins le premier segment (4a) du moyeu à la nacelle (1) de l'éolienne,
- connexion d'une deuxième pale (3b) de rotor à un deuxième segment (4b) du moyeu,
- levage de la deuxième pale (3b) de rotor et du deuxième segment (4b) du moyeu jusqu'à la nacelle (1) de l'éolienne,
- connexion du deuxième segment (4b) du moyeu à la nacelle (1) de l'éolienne et au premier segment (4a) du moyeu.

2. Procédé selon la revendication 1, comprenant l'étape de
- établissement d'une connexion électrique et/ou hydraulique entre le premier segment (4a) du moyeu et le deuxième segment (4b) du moyeu, pour connecter un système électrique ou hydraulique à l'intérieur du moyeu (6).

3. Procédé selon la revendication 1 ou 2, comprenant l'étape de
- établissement d'une connexion électrique et/ou hydraulique entre au moins un segment (4a, 4b, 4c) du moyeu et la nacelle (1) de l'éolienne.

4. Procédé selon la revendication 1, comprenant les étapes de
- connexion d'une première pale (3a) de rotor à un premier segment (4a) d'un moyeu,
- connexion d'une deuxième pale (3b) de rotor à un deuxième segment (4b) du moyeu,
- connexion au moins du premier segment (4a) du moyeu et du deuxième segment (4b) du moyeu,
- levage des au moins deux segments (4a, 4b) jusqu'à la nacelle (1) de l'éolienne, et
- connexion des segments (4a, 4b) à la nacelle (1) de l'éolienne.
